# EUROPÄISCHE PATENTSCHRIFT

(11) **EP 2 225 080 B1**
(45) Veröffentlichungstag und Bekanntmachung des Hinweises auf die Patenterteilung: **19.12.2012**
(21) Anmeldenummer: 08862594.2
(22) Anmeldetag: 18.10.2008
(51) Int. Cl.: B29C 45/14

(54) **VERFAHREN ZUR HERSTELLUNG VON VERBUNDBAUTEILEN**
METHOD FOR PRODUCING COMPOSITE COMPONENTS
PROCÉDÉ DE PRODUCTION D'ÉLÉMENTS COMPOSITES

(30) Priorität: 15.12.2007 DE 102007060628
(43) Veröffentlichungstag der Anmeldung: 08.09.2010
(73) Patentinhaber: Daimler AG, 70327 Stuttgart (DE)
(72) Erfinder: DUDZIAK, Kai-Uwe, 21435 Stelle (DE); JUNGE, Dieter, 21720 Grünendeich (DE); LANGWALDT, Silke, 21224 Rosengarten (DE); KÖLLN, Jörg, 21629 Neu Wulmstorf (DE); NOTTBUSCH, Hans, 22143 Hamburg (DE); FALKE, Jürgen, 25462 Rellingen (DE); REESE, Eckhard, 21641 Apensen (DE); JUNGCLAUS, Stefan, 25436 Tornesch (DE)
(74) Vertreter: JENSEN & SON
(86) Internationale Anmeldenummer: PCT/EP2008/008840
(87) Internationale Veröffentlichungsnummer: WO 2009/077026

(56) Entgegenhaltungen:
- EP-A- 1 340 668
- EP-A- 1 607 312
- DE-A1- 10 014 332
- DE-B3-102005 061 280
- FR-A- 2 469 610

## Beschreibung

Die Erfindung betrifft ein Verfahren zur Herstellung von Verbundbauteilen aus einem Profil und einem Spritzgusselement gemäß dem Oberbegriff des Patentanspruches 1.

Ein gattungsgemäßes Verfahren ist aus der EP 1 340 668 A2 bekannt. Hier wird die Herstellung eines Leichtbautells mit einer Außenverrippung gezeigt, wobei der metallische Grundkörper rinnenförmig ausgebildet und an seiner Außenseite einen Verstärkungsrippenverbund aus läng und schräg oder in Umfangsrichtung verlaufenden Kunststoffrippen trägt. Die Rippen sind an den Grundkörper angespritzt und an diskreten Verbindungsstellen mit diesem über Durchbrüche, Schlitze, Sicken oder Noppen verankert. Sicken und Noppen sind dabei an einem randseitigen Flansch des rinnenförmigen Grundkörpers ausgebildet und verankern in der Umspritzung die schräg oder in Umfangsrichtung verlaufenden Rippen.

In der DE 100 14 332 C2 ist ein Verfahren beschrieben, bei dem ein Hohlprofil mittels fluidischen Innenhochdruckes ausgebildet wird und anschließend unter Bildung eines Verbundbauteils mittels eines Spritzgießverfahrens mit Kunststoff angespritzt wird. Hierbei wird durch die Schwindung des Kunststoffes in der Erstarrungsphase eine feste Umklammerung des Kunststoffelements am Hohlprofil erreicht, wenn das Hohlprofil vollumfänglich ummantelt wird. Um eine Verankerung des Kunststoffs am Hohlprofil insbesondere bei einer teilweisen Ummantelung zu erreichen, wird dieses an diskreten Stellen verformt, wie in den Fig. 2 und 3a gezeigt. Gemäß Fig. 2a wird die Verformung durch lokales Flachpressen des Hohlprofils erreicht, wonach die Anspritzung allein des flach gepressten Bereiches erfolgt. In Fig. 2b werden eine Sicke und eine Ausbuchtung am Hohlprofil erzeugt, wobei nach dem Anspritzen des Kunststoffes dieser sich nur im Bereich der Sicke und Ausbuchtung und randseitig am Hohlprofil konturtreu anlegt und nur über die Sicke und Ausbuchtung einen Halt an dem Hohlprofil findet. In Fig. 3a wird die Verankerung durch einen Durchbruch in einer flach gepressten Stelle des Hohlprofils erzielt, wobei der angespritzte Kunststoff den Durchbruch durchsetzt und dabei einen Niet ausbildet. Bei Profilen, die üblicherweise eine schmierende Korrosionsschutzschicht tragen, ist eine Trennung des Kunststoffelementes vom Profil möglich, da das Profil relativ zum Kunststoffelement in Längsrichtung bewegbar ist. Die Version mit dem Zusammenpressen und Erzeugen eines Durchbruches durch beide aufeinander liegende Blechlagen ist fertigungstechnisch sehr aufwändig.

Weiterhin ist aus der DE 103 26 768 A1 ein Hybridbauteil bekannt, das eine sich über die gesamte Erstreckung eines metallischen Hohlprofils erstreckende Rinne auf weist, in die flüssiger Kunststoff zur Bildung eines Längsflansches eingespritzt wird. Hierbei weitet sich der Grund der unterstützungslosen Rinne infolge des Spritzdruckes auf, so dass die Rinne eine Hinterschneidung ausbildet, mittels derer der erstarrte Kunststoff in radialer Richtung am Hohlprofil festgesetzt ist.

Der Erfindung liegt die Aufgabe zugrunde, ein gattungsgemäßes Verfahren dahingehend weiterzubilden, dass das Spritzgusselement des erzeugten Verbundbauteils einen unverrückbaren Halt am Profil erhält.

Die Aufgabe ist erfindungsgemäß durch die Merkmale des Patentanspruches 1 gelöst.

Hierbei wird am Profil zumindest ein zwischen den Enden des Profils liegende Formschlusselement ausgebildet, das beim Anspritzen mit erfasst und in Umfangsrichtung und Längserstreckung begrenzt aus- oder eingeformt wird. Hierdurch erhält das angespritzte Kunststoffelement in einfacher Weise einen in jede Richtung des Profils wirkenden Formschluss, so dass das an sich durch das Umgreifen des Profils in Umfangsrichtung bereits verliersicher daran gehaltene Spritzgusselement an ihm unverrückbar angebracht ist. Das Spritzgusselement wird mittels sich kreuzender Längs- und Umfangslamellen an das Profil angespritzt. Am Profil wird mindestens jeweils ein Formschlusselement unter einer Umfangslamelle und einer Längslamelle ausgeformt. Durch die Bildung von Lamellen wird das Spritzgusselement materialsparender und daher für den Leichtbau geeigneter Weise am Profil gehalten und muss nicht mehr vollvolumig das Profil umgeben. Durch die Lamellen wird dem Profil eine zusätzliche Versteifung verliehen. Durch die Kreuzung der Lamellen, die an diesen Kreuzungspunkten stoffschlüssig, also einstückig, miteinander verbunden sind, wird die Kraftverteilung einer von außen wirkenden mechanischen Kraft in das Profil und dadurch dessen Widerstandsfähigkeit bzw. Stabilität noch weiter verbessert. Des Weiteren geben sich die Lamellen durch ihre Verbindung untereinander verstärkten Halt auf dem Profil und eine verbesserte Biegesteifigkeit. Um den Halt der Lamellen am Profil erheblich zu steigern bzw. die Lamellen unverrückbar am Profil zu halten, ist sowohl unter einer Umfangslamelle als auch unter einer Längslamelle zumindest ein Formschlusselement am Profil ausgebildet. Zwar ist es denkbar, nur ein Formschlusselement insgesamt für alle Lamellen vorzusehen, was an sich durch die Verbindung der Lamellen untereinander schon einen ausreichenden Halt am Profil ermöglicht, jedoch wird durch die Ausbildung von insbesondere mehreren Formschlusselementen unter jeweils verschiedenen Lamellen ein eventuell noch mögliches Rutschen oder seitliches Verbiegen der Lamellen unterbunden. Das Formschlusselement wird erfindungsgemäß im Kreuzungsbereich der Lamellen ausgeformt, wobei ein Formschlusselement in mindestens einem Kreuzungsbereich angeordnet ist. Da das Formschlusselement im Kreuzungsbereich zumindest zwei Lamellen erfasst, sind keine separaten zusätzlichen Formschlusselemente für die einzelnen Lamellen erforderlich, was die Fertigung des Verbundbauteils erleichtert.

In einer bevorzugten Weiterbildung der Erfindung nach Anspruch 2 wird als Formschlusselement eine Vertiefung, vorzugsweise in Form einer Nut oder einer Kalotte in das Profil eingeformt. Die Nut kann in Längsrichtung oder Umfangsrichtung des Profils liegend oder schräg zu dessen Längserstreckung verlaufend ausgebildet sein. Diese Art von Formschlusselementen ist leicht auszubilden und kann nach Bedarf vor dem Anspritzen an beliebiger Stelle des Profils sogar per Hand am Profil gezielt erzeugt werden.

In einer weiteren bevorzugten Ausgestaltung der Erfindung nach Anspruch 3 wird als Formschlusselement eine Konvexität, vorzugsweise in Form eines Längswulstes oder einer noppenartigen Erhebung aus dem Profil ausgeformt. Dies entspricht in etwa der formnegativen Kontur einer Nut oder Kalotte und hat die gleiche Wirkung hinsichtlich der Lagestabilität des Spritzgusselementes am Profil. Allerdings ist die Ausbildung von Erhebungen und Wülsten bei der Verwendung eines Hohlprofils als Profil mit einfachen mechanischen Mitteln erheblich schwerer zu realisieren.

In einer weiteren besonders bevorzugten Weiterbildung der Erfindung nach Anspruch 4 wird das Spritzgusselement unter Verbergung der Kontur des Formschlusselements an das Profil angespritzt. Dabei wird das Formschlusselement in die Form des Spritzgusselementes völlig integriert und ist von außen auch nicht mehr andeutungsweise sichtbar. Dies wird erreicht, in dem das Formschlusselement bezüglich der Ausbildung als Nut und/oder Kalotte völlig ausgespritzt und bezüglich der Ausbildung als Erhebung und/oder Wulst durch die Umspritzung gehäuseartig umschlossen wird. Hierdurch erhält man eine freie beliebige Gestaltbarkeit der Form und Kontur des Spritzgusselementes, während bei bekannten Lösungen in der Regel die Spritzgusskontur der Kontur der Sicken und Ausbuchtungen folgt. Zudem werden Formen der Spritzgusselemente ermöglicht, die optischen Ansprüchen genügen können. Es ist auch denkbar, das Formschlusselement nur teilweise auszuspritzen, bzw. zu umspritzen, jedoch so, dass die Kontur des Spritzgusselements hiervon nicht verändert wird.

In einer weiteren besonders bevorzugten Ausgestaltung der Erfindung nach Anspruch 5 wird als Profil ein umfänglich geschlossenes Hohlprofil verwandt, wobei das Formschlusselement durch Innenhochdruckumformen des Hohlprofils erzeugt wird. Hierdurch wird dem Profil eine hohe Torsions- und Biegesteifigkeit verliehen, wobei durch das Innenhochdruckumformen die Form und Kontur des Ausgangsrohres hoch exakt eingestellt und gleichzeitig die Formschlusselemente ausgebildet werden können. Hierbei werden Erhebungen und dazu formnegative Konkavitäten wie Kalotten am Hohlprofil durch entsprechende Ausformungen des Umformwerkzeuges erzeugt, wobei das Ausgangsrohr an die Werkzeugkontur angepresst wird. Die Lamellen können während oder nach dem Innenhochdruckumformen angespritzt werden, jedoch immer bei einem bestehenden Innenhochdruck um zu vermeiden, dass der Spritzdruck unerwünschte Einbeulungen im Hohlprofil hinterlässt.

In einer weiteren besonders bevorzugten Weiterbildung der Erfindung nach Anspruch 6 wird das Spritzgusselement mittels der Schaumspritzgieß-Technologie hergestellt. Hierdurch ergeben sich hinsichtlich der Leichtbautechnik große Vorteile, wobei die Steifigkeit des Spritzgusselementes durch die mikrozelluläre Ausprägung des erstarrten Schaumes besonders groß ist.

Nachfolgend ist die Erfindung anhand eines in der Zeichnung dargestellten Ausführungsbeispieles näher erläutert.

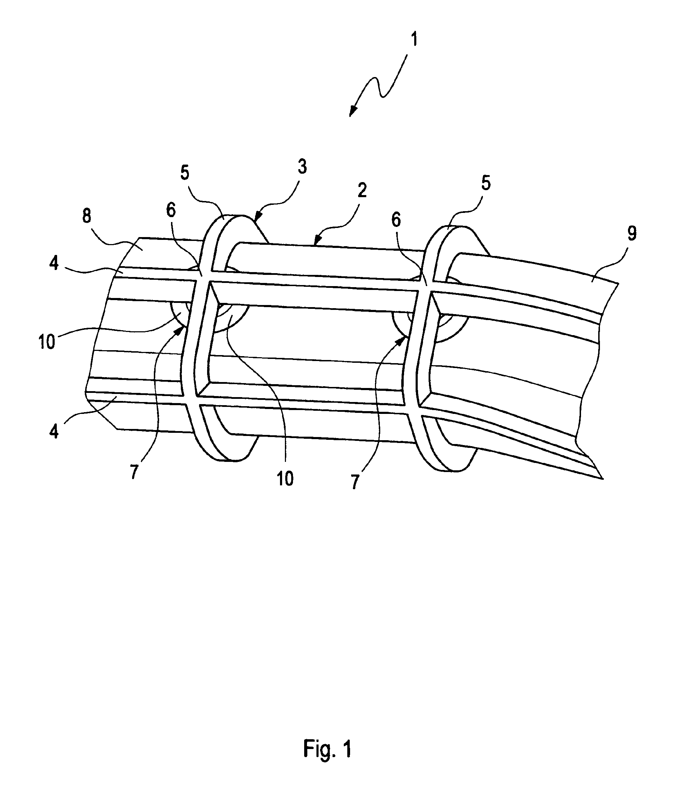

Dabei zeigt die Fig.1 in einer perspektivischen Darstellung einen Abschnitt eines erfindungsgemäß hergestellten Verbundbauteils.

In Fig. 1 ist ein Verbundbauteil 1 dargestellt, das ein als Hohlprofil 2 ausgebildetes Profil aus Metall und ein Spritzgusselement 3 aus Kunststoff beinhaltet. Denkbar wäre auch der Einsatz von faserverstärktem Kunststoff für die Ausbildung des Spritzgusselementes 3. Das Hohlprofil 2 kann eine Rohrform besitzen und gegebenenfalls vorgebogen sein. Des Weiteren ist das Hohlprofil 2 nicht auf eine kreisrunde Querschnittsform beschränkt, sondern kann in anderen Ausführungen auch von der Kreisform abweichende Querschnitte, beispielsweise, wie in der Fig. 1 gezeigt, polygonaler Form aufweisen.

Zur Herstellung des Verbundbauteils 1 wird an das Hohlprofil 2 das Spritzgusselement 3 angespritzt, wobei dieses hier über sich kreuzende Längslamellen 4 und Umfangslamellen 5 erfolgt. Das heißt, dass das Spritzgusselement 3 beispielsweise als ein hier nicht gezeigter Halter oder eine Konsole ausgebildet ist, der bzw. die sich mittels der einstückig mit ihm bzw. ihr verbundenen Lamellen 4,5 am Hohlprofil 2 hält. Denkbar ist alternativ auch, dass das Spritzgusselement 3 sich auf die Lamellen 4 und 5, beispielsweise in der Verwendung als Verbindungsflansche oder Versteifungsrippen beschränkt. Das Hohlprofil 2 kann vollständig, wie hier gezeigt, von den Umfangslamellen 5 oder auch nur teilweise umgriffen sein. Auf jeden Fall müssen die Umfangslamellen 5 das Hohlprofil 2 in radialer Richtung unverlierbar umgreifen. Die Längslamellen 4, die sich in der Längsrichtung des Hohlprofils 2 erstrecken, und die Umfangslamellen 5 sind stoffschlüssig, also einstückig miteinander zumindest in den Kreuzungsbereichen 6 verbunden und folgen unterbrechungsfrei dem Verlauf des Hohlprofils 2 in dessen Längserstreckung und Umfangskontur.

Das umfänglich geschlossene Hohlprofil 2 wird durch fluidisches Innenhochdruckumformen aus einem Ausgangsrohr oder Ausgangshohlprofil in die gewünschte Endform mit präziser Kontur umgeformt. Hierbei werden gleichzeitig Formschlusselemente 7 in Form von Kalotten in den Kreuzungsbereichen 6 der später angespritzten Lamellen 4,5 ausgeformt. Die Innenhochdruckumformung kann im Übrigen nicht nur vor sondern auch während des Anspritzvorgangs erfolgen. Das unter den Lamellen 4,5 liegende Formschlusselement 7 wird beim Anspritzen mit erfasst und so mit Spritzgießmaterial ausgefüllt, dass dessen Kontur im Spritzgusselement 3 verborgen wird. Das heißt, die Form und Kontur des Formschlusselementes 7 hat keinen Einfluss auf den Konturverlauf der Lamellen 4,5. Diese weisen in den Kreuzungsbereichen 6 lediglich eine größere Tiefe auf als dazwischen. Durch die Begrenzung des zwischen den Enden 8,9 des Hohlprofils 2 liegenden Formschlusselements 7 in Umfangsrichtung und Längserstreckung und der formschlüssigen Anlage des Spritzgusselements 3 an den Begrenzungsflanken 10 des Formschlusselements 7 wird dem Spritzgusselement 3 ein unverrückbarer Halt sowohl in axialer als auch in Umfangsrichtung gegeben.

## Patentansprüche

1. Verfahren zur Herstellung von Verbundbauteilen (1) aus einem Profil (2) und einem Spritzgusselement (3), wobei das Spritzgusselement (3) an das Profil (2) angespritzt wird, so dass das Profil (2) in Umfangsrichtung unverlierbar umgriffen wird, und wobei am Profil (2) zumindest ein zwischen den Enden (8,9) des Profils (2) liegendes Formschlusselement (7) ausgebildet wird, das in Umfangsrichtung und Längserstreckung des Profils (2) begrenzt aus- oder eingeformt wird und beim Anspritzen mit erfasst wird,
**dadurch gekennzeichnet, dass** das Spritzgusselement (3) mittels sich kreuzender Längs- (4) und Umfangslamellen (5) an das Profil (2) angespritzt wird, und dass am Profil (2) ein Formschlusselement (7) in mindestens einem Kreuzungsbereich (6) der Lamellen (4,5) unter einer Umfangslamelle (5) und einer Längslamelle (4) ausgeformt wird.

2. Verfahren nach Anspruch 1,
**dadurch gekennzeichnet, dass** als Formschlusselement (7) eine Vertiefung, vorzugsweise eine Nut oder eine Kalotte in das Profil (2) eingeformt wird.

3. Verfahren nach Anspruch 1,
**dadurch gekennzeichnet, dass** als Formschlusselement (7) eine Konvexität, vorzugsweise ein Längswulst oder eine noppenartige Erhebung aus dem Profil (2) ausgeformt wird.

4. Verfahren nach einem der Ansprüche 1 bis 3,
**dadurch gekennzeichnet, dass** das Spritzgusselement (3) unter Verbergung der Kontur des Formschlusselements (7) an das Profil (2) angespritzt wird.

5. Verfahren nach einem der Ansprüche 1 bis 4,
**dadurch gekennzeichnet, dass** als Profil (2) ein umfänglich geschlossenes Hohlprofil verwandt wird und dass das Formschlusselement (7) durch Innenhochdruckumformen des Hohlprofils (2) erzeugt wird.

6. Verfahren nach einem der Ansprüche 1 bis 5,
**dadurch gekennzeichnet, dass** das Spritzgusselement (3) schaumspritzgegossen wird.

## Claims

1. Method for producing composite components (1) from a profile (2) and an injection-moulded element (3), wherein the injection-moulded element (3) is injection-moulded to the profile (2), so that the profile (2) is held captive in a wrap-around manner in the circumferential direction, and wherein at least one positive-locking element (7) located between the ends (8,9) of the profile (2) is formed on the profile (2), which positive-locking element (7) is shaped out or moulded in a limited fashion in the circumferential direction and the longitudinal dimension of the profile (2) and is included in the injection-moulding process,
**characterised in that** the injection-moulded element (3) is injection-moulded to the profile (2) by means of mutually crossing longitudinal (4) and circumferential (5) fins, and **in that** a positive-locking element (7) is formed on the profile (2) in at least one crossing region (6) of the fins (4, 5) under a circumferential fin (5) and a longitudinal fin (4).

2. Method according to claim 1,
**characterised in that** an indentation, preferably a groove or a spherical indentation, is moulded into the profile (2) as a positive-locking element (7).

3. Method according to claim 1,
**characterised in that** a convexity, preferably a longitudinal bead or a burl-type high spot, is formed on the profile (2) as a positive-locking element (7).

4. Method according to any of claims 1 to 3,
**characterised in that** the injection-moulded element (3) is injection-moulded to the profile (2) while hiding the contour of the positive-locking element (7).

5. Method according to any of claims 1 to 4,
**characterised in that** a circumferentially closed hollow section is used as the profile (2), and **in that** the positive-locking element (7) is produced by hydroforming the hollow section (2).

6. Method according to any of claims 1 to 5,
**characterised in that** the injection-moulded element (3) is produced by structural foam moulding.

## Revendications

1. Procédé permettant de produire des éléments composites (1) à partir d'un profilé (2) et d'un élément moulé par injection (3), l'élément moulé par injection (3) étant moulé par injection sur le profilé (2), de sorte que le profilé (2) est enveloppé de manière imperdable dans une direction périphérique, et qu'au moins un élément de fermeture de moule (7) se trouvant entre les extrémités (8, 9) du profilé (2) est formé sur le profilé (2), ledit élément de fermeture de moule (7) forme un creux ou un relief limité dans les directions périphérique et longitudinale du profilé (2) et est inclus pendant le moulage par injection, **caractérisé en ce que** l'élément moulé par injection (3) est injecté sur le profilé (2) au moyen de lamelles périphériques (5) et longitudinales (4) qui se croisent, et **en ce que** sur le profilé (2) un élément de fermeture de moulage (7) dans au moins une région de croisement (6) des lamelles (4, 5) forme un creux sous une lamelle périphérique (5) et une lamelle longitudinale (4).

2. Procédé selon la revendication 1, **caractérisé en ce qu'**en tant qu'élément de fermeture de moulage (7) est moulé un creux, de préférence une rainure ou une calotte dans le profilé (2).

3. Procédé selon la revendication 1, **caractérisé en ce qu'**en tant qu'élément de fermeture de moulage (7) une convexité, de préférence un renflement longitudinal ou une protubérance en forme de bouton est moulée à partir du profilé (2).

4. Procédé selon l'une quelconque des revendications 1 à 3, **caractérisé en ce que** l'élément moulé par injection (3) est injecté en occultant le contour de l'élément de fermeture de moulage (7) sur le profilé (2).

5. Procédé selon l'une quelconque des revendications 1 à 4, **caractérisé en ce qu'**un profilé creux fermé sur sa périphérie est utilisé comme profilé (2) et **en ce que** l'élément de fermeture de moulage (7) est formé par le moulage à haute pression intérieure du profilé creux (2).

6. Procédé selon l'une quelconque des revendications 1 à 5, **caractérisé en ce que** l'élément de fermeture de moulage (3) est moulé par moussage par injection.
